(19) Europäisches Patentamt / European Patent Office / Office européen des brevets

(11) **EP 2 440 412 B1**

(12) **EUROPÄISCHE PATENTSCHRIFT**

(45) Veröffentlichungstag und Bekanntmachung des Hinweises auf die Patenterteilung:
**24.08.2016 Patentblatt 2016/34**

(51) Int Cl.:
**B42D 15/00** (2006.01)   **G02B 26/02** (2006.01)
**G07D 7/04** (2016.01)   **G02B 5/18** (2006.01)

(21) Anmeldenummer: **10725023.5**

(22) Anmeldetag: **31.05.2010**

(86) Internationale Anmeldenummer:
**PCT/EP2010/003291**

(87) Internationale Veröffentlichungsnummer:
**WO 2010/142391 (16.12.2010 Gazette 2010/50)**

(54) **SICHERHEITSELEMENT MIT EINEM MAGNETISCHEN FLUID**

SECURITY DOCUMENT WITH A MAGNETIC FLUID

ELÉMENT DE SÉCURITÉ AVEC UN FLUIDE MAGNÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **10.06.2009 DE 102009024447**

(43) Veröffentlichungstag der Anmeldung:
**18.04.2012 Patentblatt 2012/16**

(73) Patentinhaber: **Giesecke & Devrient GmbH 81677 München (DE)**

(72) Erfinder:
• **BORNSCHLEGL, Alexander 81735 München (DE)**
• **MENGEL, Christoph 83607 Holzkirchen (DE)**
• **LIEBLER, Ralf 83727 Schliersee (DE)**

(56) Entgegenhaltungen:
**EP-A2- 1 972 463       DE-A1-102007 052 477**
**US-A1- 2009 039 644**

• **JIANPING GE ET AL: "Magnetically responsive colloidal photonic crystals" JOURNAL OF MATERIALS CHEMISTRY, Bd. 18, Nr. 42, 14. November 2008 (2008-11-14), Seiten 5041-5045, XP002602559 ISSN: 0959-9428 DOI: 10.1039/B809958H**
• **LEAL CALDERON F. ET AL: "Direct measurement of colloidal forces"[Online] Bd. 72, Nr. 18, Mai 1994 (1994-05), Seiten 2959-2962 + 2pp figures, XP002602560 PHYS. REV. LETT.L Gefunden im Internet: URL:http://prl.aps.org/pdf/PRL/v72/i18/p29 59_1> [gefunden am 2010-10-04]**

**Beschreibung**

Die Erfindung betrifft ein Sicherheitselement mit einem durch ein externes Magnetfeld veränderbaren optischen Erscheinungsbild. Die Erfindung betrifft ferner ein Sicherheitselement mit einer Markierungsschicht mit einem vorbestimmten optischen Erscheinungsbild, Verfahren zur Herstellung derartiger Sicherheitselemente sowie einen entsprechend ausgestatteten Datenträger.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens, eines selbsttragenden Transferelements oder auch in Form eines direkt auf ein Wertdokument aufgedruckten Merkmalsbereichs ausgebildet sein.

Sicherheitselemente mit einem veränderbaren optischen Erscheinungsbild, das von einem Benutzer interaktiv beeinflusst werden kann, weisen dabei eine besonders hohe Fälschungssicherheit auf, da interaktiv auslösbare optische Effekte mit Kopiergeräten nicht reproduziert werden können.

Aus dem Dokument US 2009/0039644A1 sind Mikrokapsel zur Beschichtung eines Substrats bekannt. In einer Mikrokapsel sind in einer Flüssigkeit längliche magnetische Nanopartikel in Form von Spänen, welche sich durch ein externes magnetisches Feld ausrichten können. Dabei richten sich die Späne senkrecht zum Substrat aus, so dass die Mikrokapseln lichtdurchlässig sind und transparent erscheinen.

Aus dem Dokument "Magnetically responsive colloidal photonic crystals" von Jianping Ge et. al. aus "Journal of Materials Chemistry", Band 18, Nr. 42 sind in PDMS verkapselte superparamagnetische Nanopartikel, welche mittels eines Magnetfeldes einen photonischen Kristall ausbilden können, bekannt.

Aus der Druckschrift WO 03/089250 A2 ist ein Sicherheitselement bekannt, das zumindest teilweise aus einem Material besteht, das durch ein elektrisches oder magnetisches Feld optisch veränderbar ist. Das optisch veränderbare Material umfasst dazu vorzugsweise eine Vielzahl von Teilchen, die mittels des elektrischen oder magnetischen Felds in ihrer Lage oder Ausrichtung veränderbar sind. Die Herstellung des optisch veränderbaren Materials, bei der die Teilchen in Mikrokapseln eingeschlossen werden und die Mikrokapseln mittels eines Quellungsmittels in einen aufgequollenen Zustand gebracht werden, ist allerdings verhältnismäßig aufwendig. Auch ist die Bandbreite der erzeugbaren optischen Effekte begrenzt.

Ausgehend davon liegt der Erfindung die Aufgabe zugrunde, ein Sicherheitselement der eingangs genannten Art weiter zu verbessern und insbesondere ein visuell attraktives Sicherheitselement hoher Fälschungssicherheit zu schaffen, dessen optischen Erscheinungsbild bei der Echtheitsprüfung interaktiv beeinflusst werden kann.

Diese Aufgabe wird durch das Sicherheitselement mit den Merkmalen des Hauptanspruchs gelöst. Ein Sicherheitselement mit einer Markierungsschicht mit einem vorbestimmten optischen Erscheinungsbild, Verfahren zur Herstellung derartiger Sicherheitselemente sowie ein entsprechend ausgestatteter Datenträger sind in den nebengeordneten Ansprüchen angegeben. Weiterbildungen der Erfindung sind Gegenstand der abhängigen Ansprüche.

Gemäß der Erfindung weist ein gattungsgemäßes Sicherheitselement eine Vielzahl von Mikrokapseln auf, die eine Suspension aus einer Trägerflüssigkeit und magnetischen Nanopartikeln enthalten, welche superparamagnetisch sind. Ohne ein externes Magnetfeld sind die Nanopartikel innerhalb einer Mikrokapsel frei beweglich angeordnet. Weiterhin bilden in einem externen Magnetfeld die Nanopartikel in den Mikrokapseln reversibel einen photonischen Kristall aus, wobei die Nanopartikel in der Mikrokapsel regelmäßig angeordnet sind und eine Gitterkonstante bilden. Durch diese Maßnahmen wird ein reversibles, interaktiv auslösbares Humanmerkmal geschaffen, das durch externe magnetische Felder verifiziert werden kann, wie nachfolgend genauer erläutert.

Es sei an dieser Stelle angemerkt, dass der Begriff "photonischer Kristall" in der vorliegenden Anmeldung für jede supramolekulare Überstruktur verwendet wird, mit der sich der erfindungsgemäße Effekt einstellt. Insbesondere bezieht sich der Begriff "photonischer Kristall" auf supramolekulare Überstrukturen mit einer ein-, zwei oder dreidimensionalen Fernordnung. D.h., ein "photonischer Kristall" im Sinne der Erfindung weist in einer, zwei oder drei Dimensionen eine regelmäßige Anordnung der in einer Mikrokapsel enthaltenen magnetischen Nanopartikel auf. Ob ein erfindungsgemäßer, durch ein externes Magnetfeld erzeugter photonischer Kristall eine ein-, zwei- oder dreidimensionale Fernordnung aufweist, hängt in erster Linie von dem angelegten externen Magnetfeld ab. Ein im Wesentlichen in zwei Dimensionen homogenes externes Magnetfeld wird in der Regel einen photonischen Kristall mit regelmäßiger Anordnung der Nanopartikel in zwei Dimensionen ausbilden, während ein im Wesentlichen in drei Dimensionen homogenes Magnetfeld in der Regel einen photonischen Kristall mit regelmäßiger Anordnung der Nanopartikel in drei Dimenionen ausbilden wird.

Die mikroverkapselten Nanopartikelsuspensionen können wie Pigmente in ein geeignetes Bindemittel eingebracht werden, um eine Druckfarbe zu erzeugen, die mit den im Sicherheitsdruckbereich üblichen Druckverfahren, insbesondere im Siebdruck oder Stichtiefdruck, verdruckt werden kann. Eine spezielle Eignung des Substrats ist wegen der Mikroverkapselung nicht notwendig. Dadurch ist es möglich, die reversiblen photonischen Kristalle auf beliebige Substrate aufzubringen. Weiterhin kann die Druckfarbe mithilfe bekannter Drucktechniken und mit allgemein verfügbaren Druckmaschinen auf das Substrat aufgebracht werden. Die Druckfarbe kann zusätzlich auch an sich bekannte Farbstoffe oder Farbzusätze enthalten, wie weiter unten am Beispiel eines Zusatzes magnetisch ausrichtbarer Pigmente erläutert.

Erfindungsgemäß sind die magnetischen Nanopartikel paramagnetisch und im Besonderen superparamagnetisch. Weiter sind die magnetischen Nanopartikel vorzugsweise monodispers. Dabei werden Partikel im Rahmen der vorliegenden Erfindung als monodispers bezeichnet, wenn sie sehr eng teilchengrößenverteilt sind, insbesondere wenn für die Verteilung der Teilchengrößen $\sigma_m/d_m < 5\%$ oder sogar $< 2\%$ gilt, wobei $d_m$ den Mittelwert und $\sigma_m$ die Standardabweichung der Größenverteilung darstellt. Der Mittelwert $d_m$ der Durchmesser der Nanopartikel liegt im Rahmen der Erfindung mit Vorteil zwischen 2 nm und 300 nm.

Die magnetischen Nanopartikel enthalten bevorzugt Eisenoxid, insbesondere $\gamma$-$Fe_2O_3$ oder $Fe_3O_4$. Sie können auch als Kern-Hülle-Teilchen ausgebildet sein und dabei vorzugsweise einen Kern aus Eisenoxid, insbesondere aus $\gamma$-$Fe_2O_3$ oder $Fe_3O_4$, enthalten.

Die Suspension innerhalb der Mikrokapseln ist vorzugsweise elektrostatisch, sterisch oder durch Solvationskräfte stabilisiert.

In vorteilhaften Ausgestaltungen weist die Trägerflüssigkeit der Suspension eine Viskosität auf, die so gewählt ist, dass die magnetischen Nanopartikel nach dem Entfernen des externen Magnetfelds innerhalb einer Relaxationszeit, die zwischen 0,1 s und 10 s liegt, von dem geordneten Zustand eines photonischen Kristalls in einen ungeordneten Zustand zurückkehren. Dadurch kann das Sicherheitselement bei der Echtheitsprüfung zusätzlich ein mit einer charakteristischen Geschwindigkeit ablaufendes Farbenspiel zeigen und damit die optische Attraktivität und den Wiedererkennungswert noch erhöhen.

In einer Weiterbildung der Erfindung enthalten die Mikrokapseln einen aktivierbaren Fixierstoff, durch dessen Aktivierung die magnetischen Nanopartikel in ihrer gegenwärtigen Position fixierbar sind. Beispielsweise kann die Trägerflüssigkeit der Mikrokapseln polymerisierbar sein oder vernetzbare Bestandteile enthalten. Die Trägerflüssigkeit enthält vorzugsweise auch Substanzen, die bei Einwirkung äußerer Einflüsse, wie etwa Licht, Wärme oder Druck, die Polymerisation auslösen können. Polymerisationsstarter können auch in kleinen Mikro- oder Nanokapseln angeordnet sein, die in der Trägerflüssigkeit der Mikrokapseln verteilt sind und deren Hülle durch einen externen Stimulus, wie etwa Infrarot-Bestrahlung zerstört werden kann, um die Polymerisationsstarter freizusetzen.

Auf diese Weise ist es möglich, ein gewünschtes optisches Erscheinungsbild eines Sicherheitselements zunächst magnetisch zu erzeugen und durch Aktivierung des Fixierstoffs dauerhaft in dem Sicherheitselement zu fixieren.

Dabei kann auch eine Kombination eines dauerhaft fixierten mit einem reversibel auslösbaren optischen Erscheinungsbild vorgesehen sein, wie weiter unten genauer erläutert.

Als Verkapselungsmaterial für die Kapselhülle der Mikrokapseln eignet sich beispielsweise Melamin/Formaldehyd, Polyurethane, Gelatine, modifizierte Gelatine, insbesondere mit chemischer Nachvernetzung, sowie PMMA und andere Polyacrylate. Vorzugsweise ist das Verkapselungsmaterial der Mikrokapseln im sichtbaren Spektralbereich transparent. Im manchen Ausgestaltung enthält das Verkapselungsmaterial der Mikrokapseln Zusatzstoffe, die der Kapselhülle zusätzliche Eigenschaften verleihen, beispielsweise Lasermarkierbarkeit, UV-Schutz, Lumineszenz und dergleichen. Als Zusatzstoffe kommen etwa kolloidale Metallpartikel, IR- oder UV-Absorber oder Lumineszenzstoffe in Betracht.

Der Durchmesser der Mikrokapseln liegt mit Vorteil zwischen etwa 1 $\mu$m und etwa 100 $\mu$m, insbesondere zwischen etwa 1 $\mu$m und etwa 80 $\mu$m. Die Wandstärke der Mikrokapseln liegt typischerweise zwischen 5% und 25 %, vorzugsweise zwischen 10% und 20% des Durchmessers der Mikrokapseln.

In vorteilhaften Ausgestaltungen liegen die Mikrokapseln auf dem Sicherheitselement bereichsweise in Form von Mustern, Zeichen oder einer Codierung vor. Alternativ oder zusätzlich können die Mikrokapseln auch bereichsweise in Form von Mustern, Zeichen oder einer Codierung zerstört oder modifiziert sein, so dass das optische Erscheinungsbild des Sicherheitselement in den zerstörten Bereichen durch ein externes Magnetfeld nicht veränderbar ist, bzw. in den modifizierten Bereichen ein geändertes Ansprechverhalten auf das externes Magnetfeld aufweist. Alle diese Varianten erlauben eine Individualisierung des Sicherheitselements durch entsprechendes bereichsweises Aufbringen, Zerstören oder Modifizieren der Mikrokapseln.

Erfindungsgemäß liegen die Mikrokapseln in einer Markierungsschicht mit einer Dicke von weniger als 100 $\mu$m vor, bevorzugt in einer Markierungsschicht mit einer Dicke zwischen 1 $\mu$m und 20 $\mu$m. Die Markierungsschicht ist dabei zwischen einer dunklen Untergrundschicht und einer optisch variablen Schicht, mit Interferenzschichtpigmenten angeordnet. Grundsätzlich ist es aber auch denkbar, dass die Markierungsschicht und die optisch variable Schicht in Form von nur einer Schicht ausgebildet sind, wobei die einzelne Schicht dann z.B. Interferenzschichtpigmente und eine Vielzahl an Mikrokapseln mit magnetischen Nanopartikeln enthält. Alternativ zu den vorstehend genannten Interferenzschichtpigmenten kann die optisch variable Schicht auch vernetzte cholesterische Flüssigkristallpigmente enthalten oder aber als im Wesentlichen homogene Schicht aus vernetzten cholesterischen Flüssigkristallen ausgebildet sein.

Die Markierungsschicht kann auch mit einer magnetischen Untergrundschicht kombiniert sein, die vorzugsweise in Form von Mustern, Zeichen oder einer Codierung vorliegt. Die Markierungsschicht kann neben den magnetischen Nanopartikeln auch Farbstoffe, Farbzusätze oder weitere Effektpigmente enthalten, beispielsweise magnetisch ausrichtbare Effektpigmente, die magnetisch in Form eines Motivs ausgerichtet sind.

In einem zweiten Aspekt enthält die Erfindung ein Sicherheitselement mit einer Markierungsschicht mit einem vorbestimmten optischen Erscheinungsbild, bei dem

- die Markierungsschicht eine Vielzahl von Mikrokapseln aufweist, die magnetische Nanopartikel enthalten, welche in den Mikrokapseln jeweils einen photonischen Kristall bilden und innerhalb der Mikrokapseln mit einem Fixierstoff fixiert sind, und bei dem

- die Gitterabstände der Nanopartikel der photonischen Kristalle der Mikrokapseln so aufeinander abgestimmt sind, dass die Mikrokapseln das vorbestimmte optische Erscheinungsbild der Markierungsschicht erzeugen.

In einem derartigen Sicherheitselement ist ein gewünschtes optisches Erscheinungsbild durch die Ausbildung entsprechender photonischer Kristalle zunächst magnetisch erzeugt und dann dauerhaft fixiert.

Die magnetischen Nanopartikel können dabei in der oben bereits beschriebenen Weise näher ausgebildet sein, insbesondere sind die Nanopartikel superparamagnetisch und können Eisenoxid, insbesondere $\gamma$-$Fe_2O_3$ oder $Fe_3O_4$, enthalten. Die Mikrokapseln liegen auf dem Sicherheitselement mit Vorteil bereichsweise in Form von Mustern, Zeichen oder einer Codierung vor und/ oder sind bereichsweise in Form von Mustern, Zeichen oder einer Codierung zerstört oder modifiziert.

Die Erfindung umfasst auch ein Verfahren zum Herstellen eines Sicherheitselements der zuerst beschriebenen Art, bei dem auf ein Substrat eine Vielzahl von Mikrokapseln aufgebracht wird, die eine Suspension aus einer Trägerflüssigkeit und magnetischen Nanopartikeln enthalten, welche in einem externen Magnetfeld in den Mikrokapseln reversibel einen photonischen Kristall ausbilden.

Die Erfindung umfasst weiter ein Verfahren zum Herstellen eines Sicherheitselements des zweiten Erfindungsaspekts, bei dem

- auf ein Substrat eine Markierungsschicht mit einer Vielzahl von Mikrokapseln aufgebracht wird, welche eine Suspension aus einer Trägerflüssigkeit und magnetischen Nanopartikeln enthalten, die in einem externen Magnetfeld in den Mikrokapseln reversibel einen photonischen Kristall ausbilden, und wobei die Mikrokapseln einen aktivierbaren Fixierstoff enthalten, durch dessen Aktivierung die magnetischen Nanopartikel in einer gewünschten Position fixierbar sind,

- durch externes Magnetfeld photonische Kristalle in den Mikrokapseln erzeugt werden, und

- die erzeugten photonischen Kristalle durch Aktivierung des aktivierbaren Fixierstoffs fixiert werden.

Die Erfindung umfasst weiter einen Datenträger, insbesondere ein Wertdokument, wie eine Banknote, einen Pass, eine Urkunde, eine Ausweiskarte, eine Bezahlkarte oder dergleichen, der mit einem Sicherheitselement der beschriebenen Art ausgestattet ist.

Als Substratmaterial für den Datenträger kommt jede Art von Papier in Betracht, insbesondere Baumwollpapier. Selbstverständlich kann auch Papier eingesetzt werden, welches einen Anteil x polymeren Materials im Bereich von $0 < x < 100$ Gew.-% enthält.

Weiterhin ist es grundsätzlich denkbar, dass das Substratmaterial des Datenträgers eine Kunststofffolie, z.B. eine Polyesterfolie, ist. Die Folie kann ferner monoaxial oder biaxial gereckt sein. Die Reckung der Folie führt unter anderem dazu, dass sie polarisierende Eigenschaften erhält, die als weiteres Sicherheitsmerkmal genutzt werden können.

Zweckmäßig kann es auch sein, wenn das Substratmaterial des Datenträgers ein mehrschichtiger Verbund ist, der wenigstens eine Schicht aus Papier oder einem papierartigen Material aufweist. Ein solcher Verbund zeichnet sich durch eine außerordentlich große Stabilität aus, was für die Haltbarkeit des Datenträgers von großem Vorteil ist.

Denkbar ist aber auch, als Substratmaterial ein mehrschichtiges, papierfreies Kompositmaterial einzusetzen. Diese Materialien können in bestimmten Klimaregionen der Erde mit Vorteil eingesetzt werden.

Alle als Substratmaterial eingesetzten Materialien können Zusatzstoffe aufweisen, die als Echtheitsmerkmale dienen. Dabei ist in erster Linie an Lumineszenzstoffe zu denken, die im sichtbaren Wellenlängenbereich vorzugsweise transparent sind und im nicht sichtbaren Wellenlängenbereich durch ein geeignetes Hilfsmittel, z.B. eine UV- oder IR-Strahlung emittierende Strahlungsquelle, angeregt werden können, um eine sichtbare oder zumindest mit Hilfsmitteln detektierbare Lumineszenz zu erzeugen. Auch andere Sicherheitsmerkmale können mit Vorteil eingesetzt werden, sofern sie die Betrachtung des erfindungsgemäßen Sicherheitselements nicht oder zumindest nicht wesentlich beeinträchtigen.

Das erfindungsgemäße Sicherheitselement kann, insbesondere wenn es auf einem transparenten oder transluzenten Substrat vorliegt, auch in oder über einem Fensterbereich oder einer durchgehenden Öffnung des Datenträgers angeordnet sein.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen. Die verschiedenen Ausführungsbeispiele sind nicht auf die Verwendung in der konkret beschriebenen Form beschränkt, sondern können auch untereinander kombiniert werden.

Es zeigen:

Fig. 1 eine schematische Darstellung einer Banknote mit einem erfindungsgemäßen Sicherheitselement,

Fig. 2 jeweils eine Aufsicht auf das Sicherheitselement der Fig. 1, in (a) ohne externes Magnetfeld und in (b) in einem externen Magnetfeld,

Fig. 3 schematisch ein Sicherheitselement nach einem Ausführungsbeispiel der Erfindung im Querschnitt,

Fig. 4 in (a) bis (c) Prinzipskizzen zur Erläuterung des Zustandekommens der reversiblen Farbänderung im externen Magnetfeld,

Fig. 5 ein Sicherheitselement nach einem weiteren Ausführungsbeispiel der Erfindung,

Fig. 6 ein erfindungsgemäßes Sicherheitselement mit einer weichmagnetischen Untergrundschicht bei der Verifizierung mit einem externen Magneten,

Fig. 7 ein erfindungsgemäßes Sicherheitselement mit einer magnetischen Untergrundschicht mit einer magnetischen Substanz mit mittlerer bis hoher Koerzitivfeldstärke,

Fig. 8 jeweils eine Aufsicht auf ein erfindungsgemäßes Sicherheitselement, das eine Kombination eines dauerhaft fixierten mit einem reversibel auslösbaren optischen Erscheinungsbild zeigt, in (a) ohne externes Magnetfeld und in (b) in einem externen Magnetfeld,

Fig. 9 das Sicherheitselement von Fig. 8 schematisch im Querschnitt, und

Fig. 10 ein Sicherheitselement nach einem weiteren Ausführungsbeispiel der Erfindung.

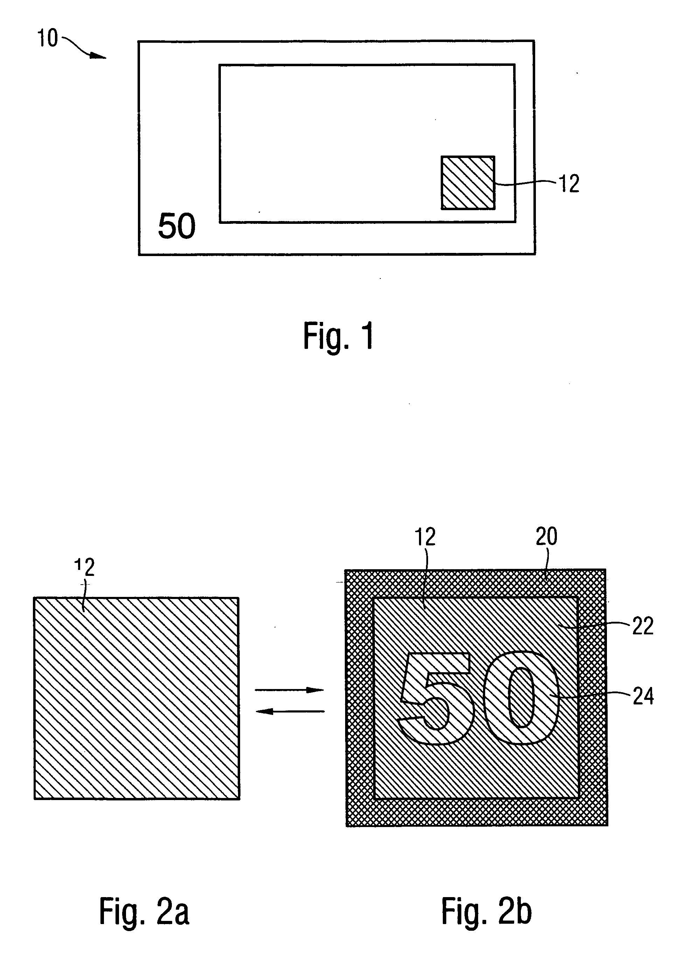

Die Erfindung wird nun am Beispiel von Sicherheitselementen für Banknoten erläutert. Die Fig. 1 zeigt dazu eine schematische Darstellung einer Banknote 10 mit einem Sicherheitselement 12, dessen optisches Erscheinungsbild durch ein externes Magnetfeld interaktiv und reversibel verändert werden kann. Diese Veränderung des optischen Erscheinungsbilds dient dem Nachweis der Echtheit des Sicherheitselements 12 und der damit versehenen Banknote 10, so dass das Sicherheitselement 12 ein reversibles, interaktiv auslösbares Humanmerkmal darstellt.

Fig. 2 zeigt in den beiden Teilbildern jeweils eine Aufsicht auf das Sicherheitselement 12 der Fig. 1 ohne externes Magnetfeld (Fig. 2(a)) und in einem externen Magnetfeld (Fig. 2(b)). Das externe Magnetfeld kann dabei von einem einfachen Magneten 20 erzeugt werden, der beispielsweise Bestandteil eines selbst nicht dargestellten Mobiltelefons, eines Kopf- oder Ohrhörers oder eines Warensicherungssystems am Point of Sale sein kann. Durch die starke Verbreitung solcher magnetfelderzeugender Geräte ist auch im normalen Bargeldverkehr eine einfache Verifikation des Sicherheitselements 12 möglich.

Das Sicherheitselement 12 des Ausführungsbeispiels der Figuren 1 und 2 weist ohne externes Magnetfeld ein homogenes, optisch variables Erscheinungsbild auf und zeigt dem Betrachter einen einheitlichen Farbkippeffekt vor einem dunklen, grau-schwarzen Hintergrund. Dabei ändert sich der Farbeindruck des Sicherheitselements 12 für den Betrachter beim Kippen des Sicherheitselements beispielsweise von Grün bei senkrechter Aufsicht zu Blau bei schräger Betrachtung. Denkbar sind allerdings auch andere Farbwechsel, wie etwa von kupferfarben zu Grün oder von goldfarben zu Grün.

Wird das Sicherheitselement 12 in ein externes Magnetfeld gebracht, beispielsweise indem es auf einen Magneten 20 gelegt wird, wie in Fig. 2(b) gezeigt, so verändert sich das optische Erscheinungsbild des Sicherheitselements 12 deutlich: In einem Hintergrundbereich 22 verändert sich die grau-schwarze Hintergrundfarbe je nach Stärke des externen Magnetfelds in einen roten, orangen, grünen oder blauen Farbeindruck, gleichzeitig wird der Farbkippeffekt in diesem Bereich schwächer sichtbar. In einem Motivbereich 24, der in Fig. 2 die Form der Zahl "50" aufweist, verändert sich das optische Erscheinungsbild dagegen durch das externe Magnetfeld nicht, dieser Bereich erscheint auch im Magnetfeld dunkel und weist einen ausgeprägten Farbkippeffekt auf.

Durch den Farbkontrast zwischen dem farbigen Hintergrundbereich 22 und dem dunklen, farbkippenden Motivbereich 24 tritt die Information "50" des Motivbereichs im Magnetfeld für den Betrachter deutlich erkennbar hervor. Zudem verändert sich die Farbe des Hintergrundbereichs 22 interaktiv, wenn der Betrachter den Magneten 20 auf das Sicherheitselement 12 zu- oder von diesem wegbewegt. Im Ausführungsbeispiel erscheint der Hintergrundbereich 22 blau, wenn das Sicherheitselement 12 direkt auf dem Magneten 20 aufliegt. Wird das Sicherheitselement 12 langsam vom Magneten 20 abgehoben, so ändert sich die Farbe des Hintergrundsbereichs 22 über Grün, Gelb und Orange bis hin zu Rot. Bei noch größerem Abstand zum Magneten 20 oder ohne externes Magnetfeld nimmt der Hintergrundsbereich 22 wieder die ursprüngliche grau-schwarze Farbe an und der Farbkippeffekt erscheint vor dem dunklen Hintergrund brillanter. Aufgrund des dann fehlenden Kontrasts zwischen Hintergrundbereich 22 und Motivbereich 24 verschwindet dann die Darstellung der Zahl "50" für den Betrachter und das homogene Erscheinungsbild der Fig. 2(a) stellt sich wieder ein.

Die Änderung des Farbeindrucks des Hintergrundbereichs 22 bei Bewegung des Magneten 20 erfolgt nicht schlagartig, sondern innerhalb einer vorgewählten Relaxationszeit, die typischerweise zwischen 0,1 und 10 Sekunden gewählt wird und die im konkreten Ausführungsbeispiel etwa 1 Sekunde beträgt. Eine Relaxationszeit von 1 Sekunde bedeutet dabei, dass, ausgehend von der Situation der Fig. 2(b), auch bei schnellem Entfernen des Magneten 20 das optische Erscheinungsbild des Sicherheitselements 12 innerhalb einer Zeitdauer von etwa 1 Sekunde kontinuierlich in das magnetfeldlose Erscheinungsbild der Fig. 2(a) übergeht. In gleicher Weise dauert es beim Auflegen des Sicherheitselements 12 auf den Magneten 20 etwa 1 Sekunde, bis sich über das Farbenspiel Rot, Orange, Gelb und Grün die endgültige blaue Farbe des Hintergrundbereichs 22 herausbildet.

Die interaktive, stufenlose und mit einer charakteristischen Geschwindigkeit ablaufende Farbveränderung im externen Magnetfeld stellt für den Benutzer ein optisch attraktives Sicherheitsmerkmal mit hohem Aufmerksamkeitsund Wiedererkennungswert dar.

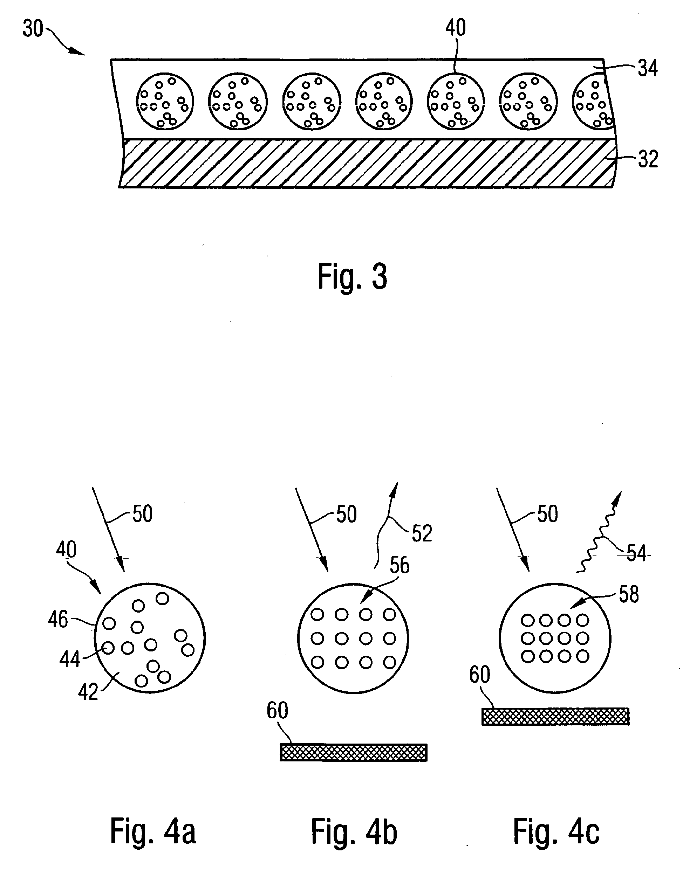

Der grundsätzliche Aufbau erfindungsgemäßer Sicherheitselemente und das Zustandekommen der reversiblen Farbänderung werden nun mit Bezug auf die schematische Querschnittsdarstellung der Fig. 3 und die Prinzipskizzen der Fig. 4 erläutert.

Mit Bezug zunächst auf das Sicherheitselement 30 der Fig. 3 ist auf einen Träger 32 eine Markierungsschicht 34 aufgebracht, die eine Vielzahl von Mikrokapseln 40 enthält. Zur Erzeugung der Markierungsschicht 34 wurden die Mikrokapseln 40 in ein geeignetes Bindemittel eingebracht und zusammen mit diesem mit einem herkömmlichen Druckverfahren, insbesondere im Siebdruck, Flexodruck, Stichtiefdruck oder Rastertiefdruck, auf den Träger 32 aufgebracht. Das Bindemittel kann neben den Mikrokapseln 40 auch weitere funktionelle Stoffe, wie etwa Farb- oder Interferenzpigmente, IR- oder UV-Absorber und dergleichen, enthalten, wie weiter unten am Beispiel von magnetisch ausrichtbaren Effektpigmenten illustriert.

Mit Bezug insbesondere auf Fig. 4(a) enthält jede der Mikrokapseln 40 eine kolloidale Suspension aus einer inerten Trägerflüssigkeit 42 mit fein verteilten, monodispersen, superparamagnetischen Eisenoxid-Nanopartikeln 44. Der Mittelwert $d_m$ der Durchmesser der monodispersen Nanopartikel 44 liegt dabei im Allgemeinen zwischen 2 nm und 300 nm und beträgt im Ausführungsbeispiel $d_m$ = 120 nm. Der Durchmesser der Mikrokapseln 40 liegt im Allgemeinen zwischen 1 $\mu$m und 100 $\mu$m und beträgt im Ausführungsbeispiel 50 $\mu$m. Um die Langzeitstabiliät der Markierungsschicht 34 zu gewährleisten, ist die Suspension in den Mikrokapseln 40 elektrostatisch, sterisch oder durch Solvationskräfte stabilisiert.

Die Mikrokapseln 40 weisen als Kapselhülle ein im sichtbaren Spektralbereich transparentes Verkapselungsmaterial 46 wie etwa Melamin-Formaldehyd, auf, wobei die Wandstärke der Kapselhülle 46 im Allgemeinen zwischen 5 % und 25 % des Kapseldurchmessers, beispielsweise bei etwa 15 % liegt.

Die Figuren 3 und 4(a) zeigten die Mikrokapseln 40 ohne externes Magnetfeld. In diesem Fall sind die in der Trägerflüssigkeit 42 frei beweglichen Nanopartikel 44 innerhalb der Mikrokapseln 40 weitgehend zufällig angeordnet. Einfallendes sichtbares Licht 50 wird von den Eisenoxid-Nanopartikeln 44 vorwiegend absorbiert, so dass die Mikrokapseln 40 und die Markierungsschicht 34 für einen Betrachter insgesamt einen dunklen, grauschwarzen Farbeindruck erzeugen.

Wird durch einen Magneten 60 ein externes Magnetfeld an die Mikrokapseln 40 angelegt, wie in den Figuren 4(b) und (c) dargestellt, so ordnen sich die superparamagnetischen Nanopartikel 44 regelmäßig an und bilden einen photonischen Kristall 56, 58 mit Gitterkonstanten der Größenordnung von 100 nm bis zu einigen 100 nm aus. Aufgrund der außerordentlich regelmäßigen Anordnung der Nanopartikel 44 in Form eines photonischen Kristalls wird von dem einfallenden Licht 50 Licht 52,54 einer selektiven Wellenlänge reflektiert. Die reflektierte Wellenlänge $\lambda$ kann dabei mit der Bragg-Bedingung

$$\lambda = 2nd\ \sin\theta$$

abgeschätzt werden, wobei n den Brechungsindex der Trägerflüssigkeit 42, d die Gitterkonstante des ausgebildeten photonischen Kristalls 56, 58 und $\theta$ den Einfallswinkel des einfallenden Lichts 50 darstellt.

Ein stärkeres Magnetfeld erzeugt dabei einen photonischen Kristall mit einer kleineren Gitterkonstante d, so dass eine Erhöhung des Magnetfeld zu einer Blauverschiebung des reflektierten Lichts 52, 54 führt. Beispielsweise ergibt sich bei einer Trägerflüssigkeit 42 mit n = 1,33 für den Einfallswinkel $\theta$ = 90° und einer Gitterkonstante des photonischen Kristalls 56 von d = 280 nm eine selektive Reflexion 52 im roten Spektralbereich ($\lambda$ = 750 nm). Ein solcher photonischer Kristall 56 kann in den Mikrokapseln 40 durch ein erstes, schwächeres Magnetfeld induziert werden, wie in Fig. 4(b) gezeigt.

Wird nun die Stärke des Magnetfelds erhöht, beispielsweise indem der Magnet 60 näher an das Sicherheitselement mit den Mikrokapseln 40 herangebracht wird, so wird die Gitterkonstante des photonischen Kristalls verringert und die Wellenlänge spezifischer Reflexion blauverschoben. Bei einer Gitterkonstante des photonischen Kristalls 58 von d = 170 nm ergibt sich nach der Bragg-Bedingung eine selektive Reflexion 54 im blauen Spektralbereich ($\lambda$ = 450 nm). Ein solcher photonischer Kristall 58 kann durch ein zweites, stärkeres Magnetfeld erzeugt werden, wie in Fig. 4(c) gezeigt.

Im externen Magnetfeld stellt die sich Gitterkonstante d des photonischen Kristalls 56, 58 jeweils gerade so ein, dass die anziehenden magnetischen Kräfte zwischen den superparamagnetischen Nanopartikeln 44 und die abstoßenden Kräfte, die je nach der gewählten Stabilisierung der Suspension elektrostatische Kräfte, sterische Kräfte, van der Waals-Kräfte oder dergleichen sein können, gleich sind. Da die Stärke der magnetischen Kräfte zwischen den superparamagnetischen Nanopartikeln 44 von der Stärke des angelegten externen Magnetfelds abhängt, kann durch das externe Magnetfeld die Gitterkonstante des photonischen Kristalls und damit die Wellenlänge der spezifischen Reflexion nach Wunsch eingestellt werden.

Wird das externe Magnetfeld entfernt, so fallen auch die anziehenden magnetischen Kräfte zwischen den Nanopartikeln 44 weg und die Nanopartikel 44 kehren innerhalb einer gewissen Relaxationszeit in einen ungeordneten Zustand entsprechend Fig. 4(a) zurück. Die Geschwindigkeit dieser Rückkehr kann durch die Viskosität der Trägerflüssigkeit 42 in weitem Bereich nach Wunsch eingestellt werden. Beispielsweise kann durch die Viskosität der Trägerflüssigkeit eine Relaxationszeit von etwa 1 Sekunde vorgegeben werden, wie bei Fig. 2 beschrieben.

Die Nanopartikel können nicht nur kolloidal stabilisiert sein, sie können auch mit einer Beschichtung, beispielsweise aus $SiO_2$, versehen sein, um ihre Suspendierung in einer unpolaren Trägerflüssigkeit zu vereinfachen. In diesem Fall bilden die Nanopartikel Kern-Hülle-Teilchen, beispielsweise mit einem Kern aus Eisenoxid, insbesondere aus $\gamma$-$Fe_2O3$ oder $Fe_3O_4$, und einer geeigneten Hülle, etwa der genannten $SiO_2$-Beschichtung. Es versteht sich, dass ein Nanopartikel auch eine Hülle aus mehreren Schichten aus gleichen oder unterschiedlichen Materialien aufweisen kann, und dass ein Nanopartikel auch einen mehrteiligen Kern aus gleichen oder unterschiedlichen Materialien aufweisen kann.

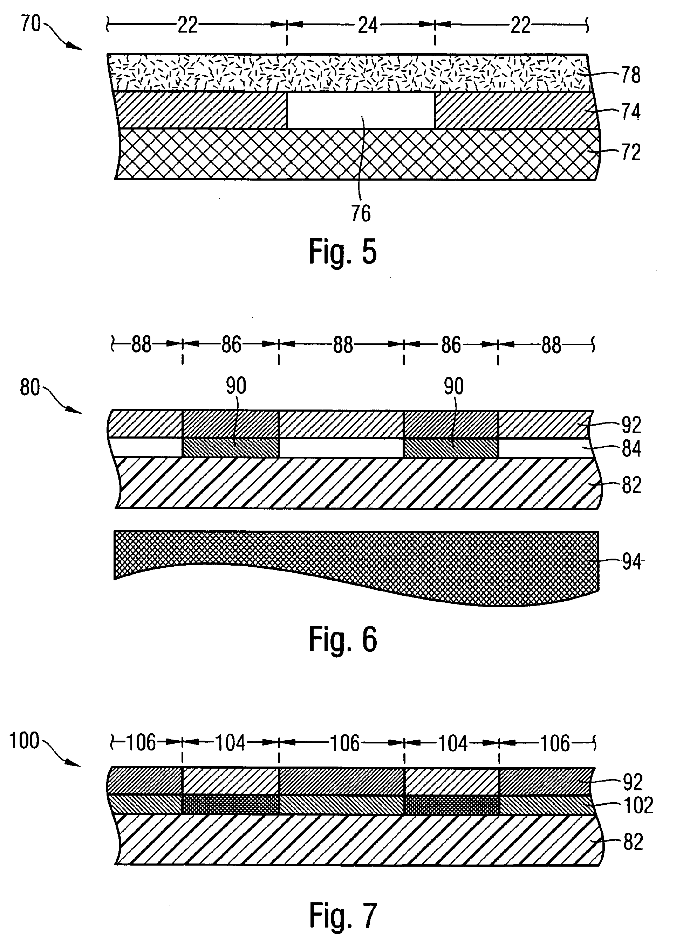

Fig. 5 zeigt ein Sicherheitselement 70 nach einem Ausführungsbeispiel der Erfindung, das die in Zusammenhang mit den Figuren 1 und 2 beschriebenen Änderungen im optischen Erscheinungsbild zeigt. Das Sicherheitselement 70 enthält eine dunkle Untergrundschicht 72, auf der eine Markierungsschicht 74 mit Mikrokapseln der oben beschriebenen Art aufgedruckt ist. Die Markierungsschicht 74 ist dabei nur bereichsweise aufgedruckt und weist Aussparungen 76 in Form eines gewünschten Motivs, beispielsweise in Form der Zahl "50" der Fig. 2 auf. Über die Untergrundschicht 72 und die Markierungsschicht 74 ist vollflächig eine optisch variable Schicht 78 aufgebracht, die einen gewünschten Farbkippeffekt erzeugt. Wie bereits erwähnt, ist es grundsätzlich denkbar, die Markierungsschicht 74 und die optisch variable Schicht 78 in einer einzigen Schicht auszubilden.

Ohne externes Magnetfeld bilden die Untergrundschicht 72 und die grau-schwarze Markierungsschicht 74 einen für einen Betrachter einheitlich erscheinenden dunklen Untergrund für die optisch variable Schicht 78, so dass der Betrachter eine homogene dunkle Fläche mit brillantem Farbkippeffekt wahrnimmt, wie bei Fig. 2(a) beschrieben.

Wird das Sicherheitselement 70 in ein externes Magnetfeld gebracht, so bilden sich in den Mikrokapseln der Markierungsschicht 74 photonische Kristalle aus, die den Farbeindruck der Markierungsschicht 74 entsprechend der Stärke des Magnetfelds verändern. Im Bereich 22 der Markierungsschicht 74 nimmt der Betrachter daher je nach Magnetfeldstärke einen roten, orangen, gelben, grünen oder blauen Farbeindruck wahr. In den ausgesparten Bereichen 76 blickt der Betrachter dagegen auch im externen Magnetfeld auf die unveränderte Untergrundschicht 72, so dass in den Bereichen 24 der dunkle Farbeindruck erhalten bleibt. Die von den Aussparungen 76 gebildete Information "50" tritt für den Betrachter somit deutlich hervor, wie in Zusammenhang mit Fig. 2 bereits geschildert.

Der Farbeindruck des Bereichs 22 im Magnetfeld muss dabei nicht einheitlich sein. Beispielsweise wird durch ein inhomogenes Magnetfeld, wie es etwa durch einen kleinen Permanentmagneten erzeugt wird, eine lokal unterschiedliche Magnetfeldstärke in der Markierungsschicht 74 und damit auch photonische Kristalle 56, 58 mit lokal unterschiedlichen Gitterkonstanten und mit unterschiedlichen spezifischen Reflexionswellenlängen $\lambda$ erzeugt.

Anstatt durch Aussparungen 76 in der Markierungsschicht 74 kann der im Magnetfeld inaktive Bereich 24 auch dadurch gebildet sein, dass dort zunächst vorhandene Mikrokapseln der Markierungsschicht 74 deaktiviert werden, beispielsweise durch lokale Laserbestrahlung, etwa mit einem Infrarotlaser. Durch die Laserstrahlung können die Nanopartikel 44 der Mikrokapseln 40 oder deren Beschichtung zerstört werden, so dass in den bestrahlten Bereichen keine Reaktion auf das externe Magnetfeld mehr erfolgt. Bei geringerem Energieeintrag des Lasers können die Nanopartikel auch nur modifiziert werden, so dass sie in den bestrahlten Bereichen ein geändertes Ansprechverhalten auf das externe Magnetfeld zeigen.

In anderen Ausgestaltungen wird der inaktive Bereich 24 durch eine Modifikation oder Zerstörung des Verkapselungsmaterials 46 der Mikrokapseln 40 erzeugt. Dazu kann eine inhärente Absorption des Verkapselungsmaterials 46 ausgenutzt werden, oder das Verkapselungsmaterial 46 kann bei der Herstellung der Mikrokapseln gezielt mit Zusatzstoffen, wie etwa Infrarotabsorbierenden Substanzen, versehen werden, die eine spätere Lasermodifikation ermöglichen. Durch lokale Bestrahlung kann dann gezielt die Transparenz oder die Eigenfarbe des Verkapselungsmaterials verändert werden oder die Funktionalität der Mikrokapseln eingeschränkt oder zerstört werden.

In einer weiteren Variante ist der inaktive Bereich 24 durch eine Fixierung der Nanopartikel 44 in einer zufälligen Anordnung innerhalb der Mikrokapseln 40 gebildet. Dies kann beispielsweise durch Verwendung einer polymerisierbaren Trägerflüssigkeit erreicht werden, die in einem Zustand zufälliger Anordnung der Nanopartikel 44 nur im Bereich 24 polymerisiert wird. Dadurch werden die Nanopartikel im Bereich 24 immobilisiert und der grau-schwarze Farbeindruck dauerhaft fixiert, während der Farbeindruck im nicht polymerisierten Bereich 22 durch ein externes Magnetfeld veränderbar bleibt.

Weitere interessante Effekte können mit Gestaltungen verwirklicht werden, in denen eine Markierungsschicht der genannten Art mit einer magnetischen Untergrundschicht kombiniert ist, wobei die magnetische Untergrundschicht vollflächig oder in Form von Mustern, Zeichen oder einer Codierung vorliegen kann.

Bei dem Sicherheitselement 80 der Fig. 6 ist auf einem Substrat 82 aus Papier oder Folie eine magnetische Untergrundschicht 84 aufgebracht, die in Form eines gewünschten Motivs Bereiche 86 mit einer weichmagnetischen Substanz 90 hoher Permeabilität und niedriger Remanenz aufweist. Über der magnetischen Untergrundschicht 84 ist eine Markierungsschicht 92 mit mikroverkapselten Nanopartikelsuspensionen der oben beschriebenen Art aufgebracht.

Ohne externes Magnetfeld ist das von der magnetischen Untergrundschicht 84 gebildete Motiv nicht zu erkennen, da die Nanopartikel 44 sowohl in den Bereichen 86 mit der weichmagnetischen Substanz 90 als auch außerhalb zufällig angeordnet sind und daher ein einheitliches optisches Erscheinungsbild der Markierungsschicht 92 erzeugen.

Wird das Sicherheitselement 80 nun in das Magnetfeld eines externen Magneten 94 gebracht, so schirmt die weichmagnetische Substanz 90 in den Bereichen 86 das externe Magnetfeld weitgehend ab. Die magnetischen Nanopartikel 44 der Mikrokapseln 40 werden in den Bereichen 86 somit nicht oder nur wenig beeinflusst und behalten ihre zufällige Anordnung im Wesentlichen bei. Dagegen induziert das externe Magnetfeld in den Mikrokapseln 40 der nicht abgeschirmten Bereiche 88 photonische Kristalle und damit Farbänderungen, wie oben beschrieben.

Die ungeordnet bleibenden Bereiche 86 der Markierungsschicht 92 sind in Fig. 6 zur Illustration mit einer engen Schraffur, die sich ordnenden Bereiche 88 mit photonischen Kristallen mit einer weiten Schraffur gezeigt. Das externe Magnetfeld des Magneten 94 erzeugt so in der Markierungsschicht 92 in den Bereichen 86, 88 ein unterschiedliches optisches Erscheinungsbild, so dass das von der magnetischen Untergrundschicht 84 gebildete Motiv für den Betrachter sichtbar wird.

Nach dem Entfernen des externen Magneten 94 bleibt in der magnetischen Untergrundschicht 84 aufgrund der niedrigen Remanenz des magnetischen Materials 90 keine Magnetisierung zurück, so dass die Nanopartikel 44 wieder in eine zufällige Anordnung zurückkehren und das angezeigte Motiv verschwindet.

Durch die interaktiv auslösbare Anzeige des Motivs wird das Sicherheitselement 80 verifiziert. Die Verifikation kann dabei mit einem beliebigen Magneten 94

erfolgen, da das anzeige Motiv in der magnetischen Untergrundschicht 84 des Sicherheitselements 80 selbst gespeichert ist. Geeignet sind somit alle leicht verfügbaren Permanentmagneten, wie sie in Mobiltelefonen, tragbaren Audioabspielgeräten oder Warensicherungssystemen eingebaut sind.

Fig. 7 zeigt ein Sicherheitselement 100 nach einer Abwandlung der Gestaltung der Fig. 6, bei der die magnetische Untergrundschicht 102 vollflächig eine magnetische Substanz mit mittlerer bis hoher Koerzitivfeldstärke (50 kA/m bis 300 kA/m) enthält.

Die magnetische Untergrundschicht 102 des gezeigten Ausführungsbeispiels wurde anfänglich durch einen starken Permanentmagneten in Form eines gewünschten Motivs mit Bereichen hoher Feldstärke bzw. sehr niedriger Feldstärke magnetisiert. Aufgrund der Remanenz des magnetischen Materials 102 bleibt auch nach Wegfall des äußeren Magnetfelds eine entsprechende Magnetisierung mit Bereichen hoher Magnetisierung 104 bzw. sehr niedriger Magnetisierung 106 in der Untergrundschicht 102 zurück. Die Feldstärke der Bereiche hoher Magnetisierung 104 ist dabei groß genug, um die Anordnung der Nanopartikeln in photonische Kristalle zu induzieren, während die Anordnung der Nanopartikel in den Bereichen sehr niedriger Magnetisierung 106 im Wesentlichen ungeordnet bleibt. Auch hier sind die ungeordneten Bereiche 106 der Markierungsschicht 92 zur Illustration mit einer engen Schraffur, die geordneten Bereiche 104 mit photonischen Kristallen mit einer weiten Schraffur gezeigt. Das anfänglich eingeprägte magnetische Muster 104,106 bleibt daher im optischen Erscheinungsbild der Markierungsschicht 92 erhalten.

Die Bereiche hoher Magnetisierung 104 können auch unterschiedlich hohe Magnetisierung aufweisen, um photonischen Kristalle verschiedener Gitterkonstante und damit verschiedener Farbe in der Markierungsschicht 92 zu induzieren.

In einer weiteren Variante kann die magnetische Untergrundschicht 102 eine magnetische Substanz mit sehr hoher Koerzitivfeldstärke von mehr als 300 kA/m enthalten. Ein so hartes magnetisches Material kann nur noch mit sehr starken Magnetfeldern ummagnetisiert werden, so dass ein anfänglich eingebrachtes Muster bei normaler Benutzung dauerhaft erhalten bleibt

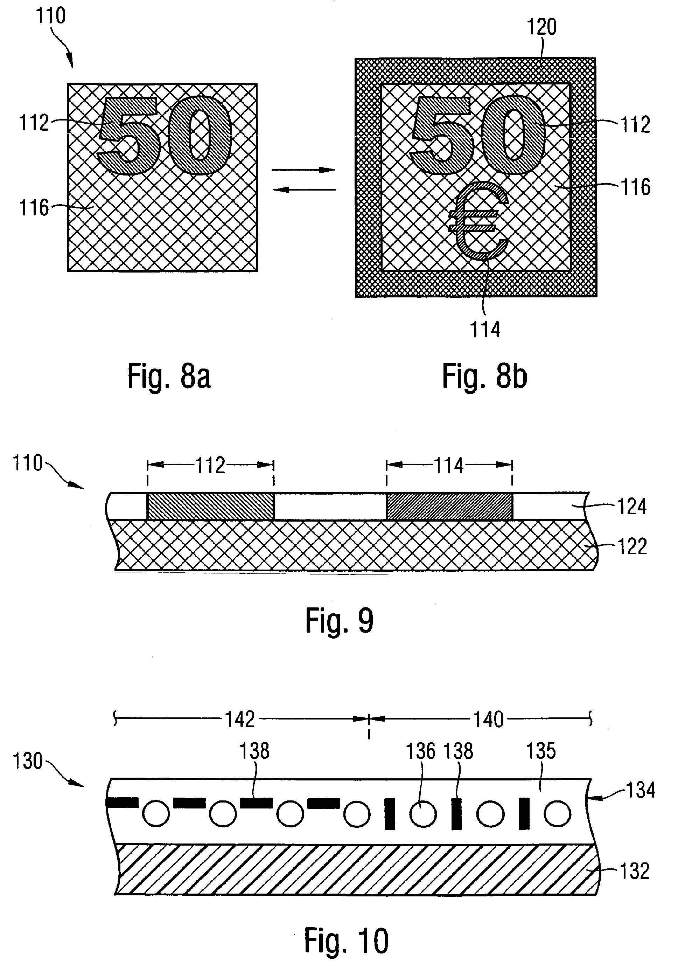

In den bisher beschriebenen Mikrokapseln sind die magnetischen Nanopartikel dauerhaft beweglich und kehren daher nach dem Entfernen des die Ordnung induzierenden externen Magnetfelds in eine ungeordnete Anordnung zurück. Die Mikrokapseln können jedoch auch so modifiziert werden, dass die magnetischen Nanopartikel in einer gewünschten Anordnung dauerhaft fixiert werden können. Dazu sind die Mikrokapseln mit einem aktivierbaren Fixierstoff ausgestattet, durch dessen Aktivierung die Nanopartikel in ihrer gegenwärtigen Lage innerhalb der Mikrokapseln fixiert werden. Das gewünschte optische Erscheinungsbild eines Sicherheitselements kann dann zunächst magnetisch erzeugt und dann dauerhaft fixiert werden. Auch eine Kombination eines dauerhaft fixierten mit einem reversibel auslösbaren optischen Erscheinungsbild ist möglich, wie nunmehr mit Bezug auf Fig. 8 erläutert.

Fig. 8(a) zeigt eine Aufsicht auf ein Sicherheitselement 110, das ohne externes Magnetfeld als ein erstes Motiv 112 die Zahl "50" in roter Farbe vor einem dunklen, grau-schwarzen Hintergrund 116 zeigt.

Wird das Sicherheitselement 110 in ein externes Magnetfeld gebracht, beispielsweise in dem es auf einen Magneten 120 gelegt wird, wie in Fig. 8(b) gezeigt, so tritt reversibel ein zweites Motiv 114, hier in Form des Symbols "€" hinzu. Im Bereich des zweiten Motivs 114 ändert sich dabei der Farbeindruck je nach Stärke des externen Magnetfelds, beispielsweise zu einem roten, orangen, grünen oder blauen Farbeindruck. Im Hintergrundbereich 116 und im Bereich des ersten Motivs 112 verändert sich das optische Erscheinungsbild des Sicherheitselements 110 dagegen durch das externe Magnetfeld nicht.

Die Farbe des zweiten Motivs 114 verändert sich interaktiv, wenn der Benutzer den Magneten 120 auf das Sicherheitselement 110 zu- oder von diesem wegbewegt. Das zweite Motiv 114 kann beispielsweise blau erscheinen, wenn das Sicherheitselement 110 direkt auf dem Magneten 120 aufliegt und seine Farbe über Grün, Gelb und Orange bis hin zu Rot ändern, wenn das Sicherheitselement 110 vom Magneten 120 entfernt wird. Bei großem Abstand zum Magneten 120 oder ohne externes Magnetfeld nimmt der Bereich des zweiten Motivs 114 wieder die ursprüngliche dunkle Farbe an und verschwindet so aufgrund des fehlenden Kontrasts zum Hintergrundbereich 116 für den Betrachter wieder (Fig. 8(a)).

Mit Bezug auf den schematischen Querschnitt der Fig. 9 kann ein solcher Kombinationseffekt dadurch erzeugt werden, dass auf eine dunkle Untergrundschicht 122 eine Markierungsschicht 124 mit Mikrokapseln aufgedruckt wird, welche neben den magnetischen Nanopartikeln einen aktivierbaren Fixierstoff, beispielsweise eine polymerisierbare Trägerflüssigkeit enthalten. Die Markierungsschicht 124 wird dabei nur bereichsweise in Form des ersten Motivs 112 (Zahl "50") und des zweiten Motivs 114 (Symbol "€") auf die Untergrundschicht 122 aufgebracht. Wie bei Fig. 5 kann optional über die Untergrundschicht 122 und die Markierungsschicht 124 eine optisch variable Schicht mit einem gewünschten Farbkippeffekt aufgebracht werden. Dann wird im Bereich des ersten Motivs 112 durch ein externes Magnetfeld ein gewünschter Farbeindruck in der Markierungsschicht 124 erzeugt, und bei angelegtem Magnetfeld der Fixierstoff der Mikrokapseln nur im Bereich des ersten Motivs aktiviert. Der Farbeindruck des ersten Motivs 112 wird dadurch dauerhaft fixiert, während das optische Erscheinungsbild des zweiten Motivbereichs 114 reversibel veränderbar bleibt. Alternativ können das erste und zweite Motiv 112,114 auch mit unterschiedlichen Mikrokapseln erzeugt werden, wobei nur die Mikrokapseln des ersten Motivs 112 einen Fixierstoff enthalten. In diesem Fall kann das Sicherheitselement beispielsweise vollflächig mit UV-Licht bestrahlt werden um die photonischen Kristalle des ersten Motivs 112 zu fixieren.

Bei dem weiteren Ausführungsbeispiel der Fig. 10 ist auf das Substrat 132 eines Sicherheitselements 130 eine Markierungsschicht 134 aufgebracht, die neben den bereits beschriebenen Mikrokapseln 136 mit magnetischen Nanopartikeln zur Ausbildung eines photonischen Kristalls auch plättchenförmige, magnetisch ausrichtbare Effektpigmente 138 enthält, die magnetisch in Form eines gewünschten Motivs ausgerichtet sind.

Die magnetisch ausrichtbaren Effektpigmente 138 können beispielsweise aus reduzierend behandeltem Carbonyleisenpulver hergestellt sein. Solche plättchenförmigen Eisenpigmente können mit einem hohen Verhältnis von Plättchendurchmesser zu Plättchendicke erzeugt werden, wobei der Plättchendurchmesser vorzugsweise zwischen 6 $\mu$m und 60 $\mu$m und die Plättchendicke insbesondere zwischen 40 nm und 200 nm liegt. Details der Herstellung und Eigenschaften solcher plättchenförmiger Eisenpigmente können der Druckschrift EP 1251152 B1 entnommen.

Für die Erzeugung der Markierungsschicht 134 wurden die Mikrokapseln 136 und die Effektpigmente 138 gemeinsam in ein Bindemittel 135 eingebracht und beispielsweise im Siebdruck verdruckt. Dann wurden die magnetisch ausrichtbaren Effektpigmente 138 durch ein externes Magnetfeld teilweise ausgerichtet. Die Eisenpigmente 138 orientieren sich dabei mit der Plättchenausdehnung entlang der Magnetfeldlinien, so dass die Eisenpigmente 138 in denjenigen Bereichen 140, in denen die Magnetfeldlinien beim Ausrichtschritt senkrecht zur Substratebene stehen, im Wesentlichen senkrecht zur Ebene der Farbschicht ausgerichtet werden, wie im rechten Bildteil von Fig. 10 gezeigt. In denjenigen Bereichen 142, in denen die Magnetfeldlinien parallel zur Substratebene verlaufen, ergibt sich entsprechend eine im Wesentlichen in der Ebene der Farbschicht liegende Orientierung der Eisenpigmente 138, wie im linken Bildteil von Fig. 10 gezeigt.

Nach dem magnetischen Ausrichten der Effektpigmente 138 wird das Bindemittel 135 der Markierungsschicht gehärtet. Um das magnetisch erzeugte Motiv dauerhaft fixieren zu können, werden insbesondere UV-härtende Farbsysteme eingesetzt, wobei reine UV-Systeme, UV/wasserbasierte Systeme oder auch UV/lösemittelbasiertes Systeme in Betracht kommen. Die plättchenförmigen Eisenpigmente 138 sind nun dauerhaft in Form des gewünschten Motivs, im Ausführungsbeispiel in Form eines einfachen Streifenmotivs 140,142 ausgerichtet. Für das menschliche Auge erscheinen die so erzeugten Motive mit einem effektvollen, dreidimensional anmutenden Erscheinungsbild, das im Rahmen dieser Beschreibung auch als 3D-Effekt oder 3D-Eindruck des Motivs bezeichnet wird.

In Ausführungsbeispiel der Fig. 10 sind der Einfachheit halber nur zwei Orientierungen der Effektpigmente 138 gezeigt. Es versteht sich jedoch, dass sich durch entsprechende Orientierung der Magnetfeldlinien praktisch beliebige Winkel zwischen den Eisenpigmentplättchen 138 und der Schichtebene einstellen lassen. Insbesondere können auch kontinuierliche, räumlich langsam variierende Übergänge in der Orientierung der Eisenpigmente erzeugt werden. Weitere Details zur Ausgestaltung magnetisch ausrichtbarer Effektpigmente und zu den Möglichkeiten ihrer Ausrichtung können der Druckschrift WO 2009/033601 A1 entnommen werden.

In einer Erfindungsvariante ist nun der 3D-Effekt der Effektpigmente 138 mit einem im externen Magnetfeld reversibel auslösbaren Farbeffekt der Mikrokapseln 136 kombiniert.

In einer weiteren Erfindungsvariante enthalten die Mikrokapseln 136 einen aktivierbaren Fixierstoff zur Fixierung der magnetischen Nanopartikel. Dieser kann so gewählt sein, dass er bei der Härtung des Bindemittels 135 ebenfalls aktiviert wird. Das Ausrichtungsmuster der Effektpigmente 138 und das optische Erscheinungsbild der Mikrokapseln 136 sind dann eng aufeinander abgestimmt, da beide Effekte durch dasselbe externe Magnetfeld ausgelöst und in diesem Zustand fixiert werden.

Alternativ kann der Fixierstoff der Mikrokapseln 136 auch unabhängig von der Härtung des Bindemittels 135 in einem zweiten Schritt, beispielsweise durch Wärme oder Laserstrahlung, aktivierbar sein. Dadurch können das Ausrichtungsmuster der Effektpigmente 138 und das optische Erscheinungsbild der Mikrokapseln 136 unabhängig voneinander bei unterschiedlichen Magnetfeld-Verteilungen und Stärken eingestellt und fixiert werden. Es versteht sich, dass die Erfindung nicht auf die gezeigten Sicherheitselemente und auf Banknoten beschränkt ist, sondern bei allen Arten von Sicherheitselementen eingesetzt werden kann, beispielsweise bei Etiketten auf Waren und Verpackungen oder bei der Absicherung von Dokumenten, Ausweisen, Pässen, Kreditkarten, Gesundheitskarten und dergleichen. Bei Banknoten und ähnlichen Dokumenten kommen neben aufgedruckten Elementen beispielsweise auch Transferelemente, Sicherheitsfäden oder Sicherheitsstreifen, und neben Aufsichtselementen auch Durchsichtselemente infrage.

## Patentansprüche

1. Sicherheitselement (12, 30, 70, 80,100,110,130) mit einem durch ein externes Magnetfeld veränderbaren optischen Erscheinungsbild, wobei das Sicherheitselement (12, 30 eine Vielzahl von Mikrokapseln (40,136) aufweist, die eine Suspension aus einer Trägerflüssigkeit (42) und magnetischen Nanopartikeln (44) enthalten, **dadurch gekennzeichnet, dass** die magnetischen Nanopartikel (44) superparamagnetisch sind, ohne einem externen Magnetfeld die Nanopartikel (44) innerhalb einer Mikrokapsel (40,136) frei beweglich angeordnet sind und in einem externen Magnetfeld die Nanopartikel (44) der Mikrokapsel (40,136) reversibel einen photonischen Kristall (56, 58) ausbilden, wobei die Nanopartikel (44) in der Mikrokapsel (40,136) regelmäßig angeordnet sind und eine Gitterkonstante bilden und wobei die Mikrokapseln (40,136) in einer Markierungsschicht (34, 74, 92,124,134) mit einer Dicke von weniger als 100 $\mu$m vorliegen, wobei die Markierungsschicht (34, 74, 92,124,134) zwischen einer dunklen Untergrundschicht (72, 84,102,122) und einer optisch variablen Schicht (78) mit Interferenzschichtpigmenten oder mit vernetzten cholesterischen Flüssigkristallpigmenten angeordnet ist oder die Markierungsschicht (34, 74, 92,124,134) und die optisch variable Schicht (78) in Form von nur einer Schicht ausgebildet sind.

2. Sicherheitselement (12, 30, 70, 80,100,110,130) nach Anspruch 1, **dadurch gekennzeichnet, dass** dass die magnetischen Nanopartikel (44) monodispers sind.

3. Sicherheitselement (12, 30, 70, 80,100,110,130) nach wenigstens einem der Ansprüche 1 bis 2, **dadurch gekennzeichnet, dass** die magnetischen Nanopartikel (44) Eisenoxid, insbesondere $\gamma$-Fe$_2$O$_3$ oder Fe$_3$O$_4$, enthalten, und/oder dass die magnetischen Nanopartikel (44) als Kern-Hülle-Teilchen ausgebildet sind und vorzugsweise einen Kern aus Eisenoxid, insbesondere aus $\gamma$-Fe$_2$O$_3$ oder Fe$_3$O$_4$ enthalten.

4. Sicherheitselement (12, 30, 70, 80,100,110,130) nach wenigstens einem der Ansprüche 1 bis 3, **dadurch gekennzeichnet, dass** die Suspension elektrostatisch, sterisch oder durch Solvationskräfte stabilisiert ist.

5. Sicherheitselement (12, 30, 70, 80,100,110,130) nach wenigstens einem der Ansprüche 1 bis 4, **dadurch gekennzeichnet, dass** die Trägerflüssigkeit (42) eine Viskosität aufweist, die so gewählt ist, dass die magnetischen Nanopartikel (44) nach dem Entfernen des externen Magnetfelds innerhalb einer Relaxationszeit, die zwischen 0,1 s und 10 s liegt, von dem geordneten Zustand eines photonischen Kristalls (56, 58) in einen ungeordneten Zustand zurückkehren.

6. Sicherheitselement (12, 30, 70, 80,100,110,130) nach wenigstens einem der Ansprüche 1 bis 5, **dadurch gekennzeichnet, dass** die Mikrokapseln (40, 136) einen aktivierbaren Fixierstoff enthalten, durch dessen Aktivierung die magnetischen Nanopartikel (44) in ihrer gegenwärtigen Position fixierbar sind.

7. Sicherheitselement (12, 30, 70, 80, 100, 110, 130) nach wenigstens einem der Ansprüche 1 bis 6, **dadurch gekennzeichnet, dass** das Verkapselungsmaterial (46) der Mikrokapseln (40,136) im sichtbaren Spektralbereich transparent ist, und/oder dass das Verkapselungsmaterial (46) der Mikrokapseln (40,136) Infrarot-absorbierende Zusatzstoffe enthält.

8. Sicherheitselement (12, 30, 70, 80,100,110,130) nach wenigstens einem der Ansprüche 1 bis 7, **dadurch gekennzeichnet, dass** die Mikrokapseln (40,136) auf dem Sicherheitselement (12) bereichsweise in Form von Mustern, Zeichen oder einer Codierung vorliegen, und/oder dass die Mikrokapseln (40,136) bereichsweise in Form von Mustern, Zeichen oder einer Codierung zerstört oder modifiziert sind, so dass das optische Erscheinungsbild des Sicherheitselement (12, 30, 70, 80, 100, 110, 130) in den zerstörten Bereichen durch das externe Magnetfeld nicht veränderbar ist, bzw. in den modifizierten Bereichen ein geändertes Ansprechverhalten auf das externe Magnetfeld aufweist.

9. Sicherheitselement (12, 30, 70, 80,100,110,130) nach wenigstens einem der Ansprüche 1 bis 8, **dadurch gekennzeichnet, dass** die Markierungsschicht (134) mit einer magnetischen Untergrundschicht (72, 84,102) kombiniert ist, die vorzugsweise in Form von Mustern, Zeichen oder einer Codierung vorliegt, und/oder dass die Markierungsschicht (134) neben den magnetischen Nanopartikeln (44) auch magnetisch ausrichtbare Effektpigmente (138) enthält, die magnetisch in Form eines Motivs ausgerichtet sind.

10. Sicherheitselement (12, 30, 70, 80,100,110,130) mit einer Markierungsschicht (34, 74, 92,124,134) mit einem vorbestimmten optischen Erscheinungsbild, wobei die Markierungsschicht (34, 74, 92,124,134) eine Vielzahl von Mikrokapseln (40,136) aufweist, **dadurch gekennzeichnet, dass**

   - in den Mikrokapseln (40,136) superparamagnetische Nanopartikel (44) enthalten sind, welche in den Mikrokapseln (40,136) jeweils einen photonischen Kristall (56, 58) bilden und innerhalb der Mikrokapseln (40,136) mit einem Fixierstoff fixiert sind, und dass
   - die Gitterabstände der Nanopartikel (44) der photonischen Kristalle (56, 58) der Mikrokapseln (40,136) so aufeinander abgestimmt sind, dass die Mikrokapseln (40,136) das vorbestimmte optische Erscheinungsbild der Markierungsschicht (34, 74, 92,124,134) erzeugen.

11. Sicherheitselement (12, 30, 70, 80,100,110,130) nach Anspruch 10, **dadurch gekennzeichnet, dass** die magnetischen Nanopartikel (44) superparamagnetisch sind und vorzugsweise Eisenoxid, insbesondere $\gamma$-$Fe_2O_3$ oder $Fe_3O_4$, enthalten, und/ oder

dass die Mikrokapseln (40,136) auf dem Sicherheitselement (12, bereichsweise in Form von Mustern, Zeichen oder einer Codierung vorliegen und/oder bereichsweise in Form von Mustern, Zeichen oder einer Codierung zerstört oder modifiziert sind.

12. Verfahren zum Herstellen eines Sicherheitselements (12, 30, 70, 80, 100,110,130) nach einem der Ansprüche 1 bis 9, bei dem auf ein Substrat eine Vielzahl von Mikrokapseln (40,136) aufgebracht wird, die eine Suspension aus einer Trägerflüssigkeit (42) und superparamagnetischen Nanopartikeln (44) enthalten, welche in einem externen Magnetfeld in den Mikrokapseln (40,136) reversibel einen photonischen Kristall (56, 58) ausbilden, wobei die Nanopartikel (44) in der Mikrokapsel (40,136) regelmäßig angeordnet sind und eine Gitterkonstante bilden, und ohne einem externen Magnetfeld die Nanopartikel (44) innerhalb einer Mikrokapsel (40,136) frei beweglich angeordnet sind.

13. Verfahren zum Herstellen eines Sicherheitselements (12, 30, 70, 80, 100,110,130) nach einem der Ansprüche 10 bis 11, bei dem

   - auf ein Substrat eine Markierungsschicht (34, 74, 92, 124, 134) mit einer Vielzahl von Mikrokapseln (40,136) aufgebracht wird, welche eine Suspension aus einer Trägerflüssigkeit (42) und superparamagnetische Nanopartikeln (44) enthalten, die in einem externen Magnetfeld in den Mikrokapseln (40,136) reversibel einen photonischen Kristall (56, 58) ausbilden, und wobei die Mikrokapseln (40,136) einen aktivierbaren Fixierstoff enthalten, durch dessen Aktivierung die magnetischen Nanopartikel (44) in einer gewünschten Position fixierbar sind,
   - durch ein externes Magnetfeld photonische Kristalle (56, 58) in den Mikrokapseln(40,136) erzeugt werden, und
   - die erzeugten photonischen Kristalle (56, 58) durch Aktivierung des aktivierbaren Fixierstoffs fixiert werden.

14. Datenträger mit einem Sicherheitselement (12, 30, 70, 80,100,110,130) nach einem der Ansprüche 1 bis 11 wobei der Datenträger bevorzugt eine Banknote (10) oder ein anderes Wertdokument, ein Pass, eine Urkunde, Bezahlkarte oder eine Ausweiskarte ist.

**Claims**

1. A security element (12, 30, 70, 80,100,110,130) having an optical appearance that is modifiable by an external magnetic field, the security element (12, 30) comprising a plurality of microcapsules (40,136) that contain a suspension comprising a carrier liquid (42) and magnetic nanoparticles (44), **characterized in that** the magnetic nanoparticles (44) are superparamagnetic, that, without an external magnetic field, the nanoparticles (44) are arranged freely movably within a microcapsule (40, 136), and that in an external magnetic field, the nanoparticles (44) in the microcapsule (40,136) reversibly form a photonic crystal (56, 58), in which the nanoparticles (44) are arranged regularly in the microcapsule (40,136) and form a lattice constant, and wherein the microcapsules (40,136) are present in a marking layer (34, 74,92,124,134) having a thickness of less than 100 $\mu$m, the marking layer (34, 74, 92,124,134) being arranged between a dark background layer (72, 84,102,122) and an optically variable layer (78) having interference layer pigments or having crosslinked cholesteric liquid crystal pigments, or the marking layer (34, 74, 92,124,134) and the optically variable layer (78) being developed in the form of only one layer.

2. The security element (12, 30, 70, 80,100,110,130) according to claim 1, **characterized in that** the magnetic nanoparticles (44) are monodisperse.

3. The security element (12, 30, 70, 80,100,110,130) according to at least one of claims 1 to 2, **characterized in that** the magnetic nanoparticles (44) include iron oxide, especially $\gamma$-Fe$_2$O$_3$ or Fe$_3$O$_4$, and/ or **in that** the magnetic nanoparticles (44) are developed as core-shell particles and preferably include a core comprising iron oxide, especially comprising $\gamma$-Fe$_2$O$_3$ or Fe$_3$O$_4$.

4. The security element (12, 30, 70, 80,100,110,130) according to at least one of claims 1 to 3, **characterized in that** the suspension is stabilized electrostatically, sterically or through solvation forces.

5. The security element (12, 30, 70, 80, 100, 110, 130) according to at least one of claims 1 to 4, **characterized in that** the carrier liquid (42) has a viscosity that is chosen such that, after the removal of the external magnetic field, the magnetic nanoparticles (44) return from the ordered state of a photonic crystal (56, 58) to an unordered state within a relaxation time that lies between 0.1 s and 10 s.

6. The security element (12, 30, 70, 80, 100, 110, 130) according to at least one of claims 1 to 5, **characterized in that** the microcapsules (40,136) contain an activatable fixing agent, by the activation of which the magnetic nanoparticles (44) are fixable in their current position.

7. The security element (12, 30, 70, 80,100,110,130) according to at least one of claims 1 to 6, **charac-**

**terized in that** the encapsulation material (46) of the microcapsules (40,136) is transparent in the visible spectral range, and/ or **in that** the encapsulation material (46) of the microcapsules (40,136) includes infrared-absorbing additives.

8. The security element (12, 30, 70, 80, 100, 110, 130) according to at least one of claims 1 to 7, **characterized in that** the microcapsules (40,136) are present on the security element (12) in some regions in the form of patterns, characters or a code, and/ or **in that** the microcapsules (40,136) are destroyed or modified in some regions in the form of patterns, characters or a code, such that the optical appearance of the security element (12, 30, 70, 80,100, 110,130) in the destroyed regions is not modifiable by the external magnetic field, or has a modified response behavior to the external magnetic field in the modified regions.

9. The security element (12, 30, 70, 80, 100, 110, 130) according to at least one of claims 1 to 8, **characterized in that** the marking layer (134) is combined with a magnetic background layer (72, 84, 102) that is preferably present in the form of patterns, characters or a code, and/or **in that**, in addition to the magnetic nanoparticles (44), the marking layer (134) also includes magnetically alignable effect pigments (138) that are magnetically aligned in the form of a motif.

10. A security element (12, 30, 70, 80, 100, 110, 130) having a marking layer (34, 74, 92,124,134) having a predetermined optical appearance, the marking layer (34, 74, 92,124,134) comprising a plurality of microcapsules (40,136), **characterized in that**

   - included in the microcapsules (40,136) are superparamagnetic nanoparticles (44) that form an photonic crystal (56,58) in each of the microcapsules (40,136) and are fixed within the microcapsules (40, 136) with a fixing agent, and **in that**
   - the lattice spacings of the nanoparticles (44) of the photonic crystals (56, 58) in the microcapsules (40,136) are coordinated with one another in such a way that the microcapsules (40,136) produce the predetermined optical appearance of the marking layer (34, 74, 92,124, 134).

11. The security element (12, 30, 70, 80, 100, 110, 130) according to claim 10, **characterized in that** the magnetic nanoparticles (44) are superparamagnetic and preferably include iron oxide, especially $\gamma$-Fe$_2$O$_3$ or Fe$_3$O$_4$, and/or **in that** the microcapsules (40,136) are present on the security element (12) in some regions in the form of patterns, characters or a code and/or are destroyed or modified in some regions in the form of patterns, characters or a code.

12. A method for manufacturing a security element (12, 30, 70, 80,100, 110,130) according to one of claims 1 to 9, in which is applied to a substrate a plurality of microcapsules (40,136) that contain a suspension comprising a carrier liquid (42) and superparamagnetic nanoparticles (44) that, in an external magnetic field, reversibly form a photonic crystal (56, 58) in the microcapsules (40,136), the nanoparticles (44) in the microcapsule (40,136) being arranged regularly and forming a lattice constant, and without an external magnetic field, the nanoparticles (44) being arranged freely movably within a microcapsule (40,136).

13. A method for manufacturing a security element (12,30, 70, 80,100, 110,130) according to one of claims 10 to 11, in which

    - to a substrate is applied a marking layer (34, 74, 92,124,134) having a plurality of microcapsules (40,136) that contain a suspension comprising a carrier liquid (42) and superparamagnetic nanoparticles (44) that, in an external magnetic field, reversibly form a photonic crystal (56,58) in the microcapsules (40,136), and the microcapsules (40,136) containing an activatable fixing agent, by the activation of which the magnetic nanoparticles (44) are fixable in a desired position,
    - through an external magnetic field, photonic crystals (56, 58) are produced in the microcapsules (40,136), and
    - the photonic crystals (56, 58) produced are fixed by activating the activatable fixing agent.

14. A data carrier having a security element (12, 30, 70, 80, 100, 110, 130) according to one of claims 1 to 11, the data carrier preferably being a banknote (10) or another value document, a passport, a certificate, a payment card or an identification card.

**Revendications**

1. Elément de sécurité (12, 30, 70, 80, 100, 110, 130) avec une image d'apparence optique modifiable par un champ magnétique externe, l'élément de sécurité (12, 30) comportant une pluralité de microcapsules (40, 136), qui contiennent une suspension composée d'un liquide de support (42) et de nanoparticules magnétiques (44), **caractérisé en ce que** les nanoparticules magnétiques (44) sont superparamagnétiques, les nanoparticules (44) sont disposées sans un champ magnétique externe librement mobiles à l'intérieur d'une microcapsule (40, 136) et les nanoparticules (44) de la microcapsule (40, 136) forment dans un champ magnétique externe un cristal photonique (56, 58) réversible, les nanoparticules (44) étant disposées régulièrement dans la microcapsule (40, 136) et formant une constante de réseau et les microcapsules (40, 136) étant présentes dans une couche de marquage (34, 74, 92, 124, 134) avec une épaisseur inférieure à 100 $\mu$m, la couche de marquage (34, 74, 92, 124, 134) étant disposée entre une couche de fond (72, 84, 102, 122) foncée et une couche optiquement variable (78) avec des pigments de couche d'interférence ou avec des pigments de cristal liquide cholestériques réticulés ou la couche de marquage (34, 74, 92, 124, 134) et la couche optiquement variable (78) étant constituées sous la forme de seulement une couche.

2. Elément de sécurité (12, 30, 70, 80, 100, 110, 130) selon la revendication 1, **caractérisé en ce que** les nanoparticules magnétiques (44) sont monodispersées.

3. Elément de sécurité (12, 30, 70, 80, 100, 110, 130) selon au moins l'une quelconque des revendications 1 à 2, **caractérisé en ce que** les nanoparticules magnétiques (44) contiennent de l'oxyde ferrique, en particulier $\gamma$-$Fe_2O_3$ ou $Fe_3O_4$ et/ou **en ce que** les nanoparticules magnétiques (44) sont constituées comme des particules noyau-enveloppe et contiennent de préférence un noyau en oxyde ferrique, en particulier en $\gamma$-$Fe_2O_3$ ou $Fe_3O_4$.

4. Elément de sécurité (12, 30, 70, 80, 100, 110, 130) selon au moins l'une quelconque des revendications 1 à 3, **caractérisé en ce que** la suspension est stabilisée de manière électrostatique, stérique ou par force de solvatation.

5. Elément de sécurité (12, 30, 70, 80, 100, 110, 130) selon au moins l'une quelconque des revendications 1 à 4, **caractérisé en ce que** le liquide de support (42) présente une viscosité qui est choisie de telle sorte que les nanoparticules magnétiques (44) reviennent après enlèvement du champ magnétique externe d'un état ordonné d'un cristal photonique (56, 58) à un état désordonné en l'espace d'un temps de relaxation qui se situe entre 0,1 s et 10 s.

6. Elément de sécurité (12, 30, 70, 80, 100, 110, 130) selon au moins l'une quelconque des revendications 1 à 5, **caractérisé en ce que** les microcapsules (40, 136) contiennent une substance fixatrice activable par l'activation de laquelle les nanoparticules magnétiques (44) peuvent être fixées dans leur position actuelle.

7. Elément de sécurité (12, 30, 70, 80, 100, 110, 130) selon au moins l'une quelconque des revendications 1 à 6, **caractérisé en ce que** le matériau de capsulage (46) des microcapsules (40, 136) est transparent dans la plage spectrale visible et/ou **en ce que** le matériau de capsulage (46) des microcapsules (40, 136) contient des additifs absorbant les infrarouges.

**8.** Elément de sécurité (12, 30, 70, 80, 100, 110, 130) selon au moins l'une quelconque des revendications 1 à 7, **caractérisé en ce que** les microcapsules (40, 136) existent sur l'élément de sécurité (12) par secteur sous la forme de motifs, de signes ou d'un codage et/ou **en ce que** les microcapsules (40, 136) sont détruites ou modifiées par secteur sous la forme de motifs, de signes ou d'un codage de sorte que l'image d'apparence optique de l'élément de sécurité (12, 30, 70, 80, 100, 110, 130) ne peut pas être modifiée dans les secteurs détruits par le champ magnétique ou présente dans les secteurs modifiés un comportement de réaction modifié au champ magnétique externe.

**9.** Elément de sécurité (12, 30, 70, 80, 100, 110, 130) selon au moins l'une quelconque des revendications 1 à 8, **caractérisé en ce que** la couche de marquage (134) est combinée avec une couche de fond magnétique (72, 84, 102), qui existe de préférence sous la forme de motifs, de signes ou d'un codage et/ou **en ce que** la couche de marquage (134) contient en plus des nanoparticules magnétiques (44) également des pigments à effet magnétiquement orientables (138), qui sont orientés magnétiquement sous la forme d'un motif.

**10.** Elément de sécurité (12, 30, 70, 80, 100, 110, 130) avec une couche de marquage (34, 74, 92, 124, 134) avec une image d'apparence optique prédéfinie, la couche de marquage (34, 74, 92, 124, 134) comportant une pluralité de microcapsules (40, 136), **caractérisé en ce que**

- dans les microcapsules (40, 136) des nanoparticules superparamagnétiques (44) sont contenues, qui forment respectivement dans les microcapsules (40, 136) un cristal photonique (56, 58) et sont fixées à l'intérieur des microcapsules (40, 136) avec une substance fixatrice, et **en ce que**
- les espacements de réseau des nanoparticules (44) des cristaux photoniques (56, 58) des microcapsules (40, 136) sont ajustés l'un sur l'autre de sorte que les microcapsules (40, 136) produisent l'image d'apparence optique prédéfinie de la couche de marquage (34, 74, 92, 124, 134).

**11.** Elément de sécurité (12, 30, 70, 80, 100, 110, 130) selon la revendication 10, **caractérisé en ce que** les nanoparticules magnétiques (44) sont superparamagnétiques et contiennent de préférence de l'oxyde ferrique, en particulier $\gamma$-Fe$_2$O$_3$ ou Fe$_3$O$_4$ et/ou en ce que les microcapsules (40, 136) existent sur l'élément de sécurité (12) par secteur sous la forme de motifs, de signes ou d'un codage et/ou sont détruites ou modifiées par secteur sous la forme de motifs, de signes ou d'un codage.

**12.** Procédé destiné à fabriquer un élément de sécurité (12, 30, 70, 80, 100, 110, 130) selon au moins l'une quelconque des revendications 1 à 9, pour lequel une pluralité de microcapsules (40, 136) est appliquée sur un substrat, celles-ci contenant une suspension composée d'un liquide de support (42) et de nanoparticules superparamagnétiques (44), lesquelles constituent dans un champ magnétique externe de manière réversible un cristal photonique (56, 58) dans les microcapsules (40, 136), les nanoparticules (44) étant disposées de manière régulière dans les microcapsules (40, 136) et formant une constante de réseau et les nanoparticules (44) étant disposées librement mobiles à l'intérieur d'une microcapsule (40, 136) sans un champ magnétique externe.

**13.** Procédé destiné à fabriquer un élément de sécurité (12, 30, 70, 80, 100, 110, 130) selon au moins l'une quelconque des revendications 10 à 11, pour lequel

- une couche de marquage (34, 74, 92, 124, 134) avec une pluralité de microcapsules (40, 136) est appliquée sur un substrat, celles-ci contenant une suspension composée d'un liquide de support (42) et de nanoparticules superparamagnétiques (44), qui constituent dans un champ magnétique externe de manière réversible un cristal photonique (56, 58) dans les microcapsules (40, 136) et les microcapsules (40, 136) contenant une substance fixatrice activable, par l'activation de laquelle les nanoparticules magnétiques (44) peuvent être fixées dans une position souhaitée,
- des cristaux photoniques (56, 58) étant produits par un champ magnétique externe dans les microcapsules (40, 136), et
- les cristaux photoniques produits (56, 58) étant fixés par l'activation de la substance fixatrice activable.

**14.** Support de données avec un élément de sécurité (12, 30, 70, 80, 100, 110, 130) selon au moins l'une quelconque des revendications 1 à 11, le support de données étant de préférence un billet de banque (10) ou un autre document de valeur, un passeport, un document, une carte de paiement ou une carte d'identité.

**Fig. 1**

**Fig. 2a**                    **Fig. 2b**

**Fig. 3**

**Fig. 4a**   **Fig. 4b**   **Fig. 4c**

70

|← 22 →|← 24 →|← 22 →|

78

74

76

72

**Fig. 5**

80

|← 88 →|← 86 →|← 88 →|← 86 →|← 88 →|

90        90

92
84
82

94

**Fig. 6**

100

|← 106 →|← 104 →|← 106 →|← 104 →|← 106 →|

92
102
82

**Fig. 7**

110

112

116

120

112

116

114

**Fig. 8a**          **Fig. 8b**

110

112          114

124

122

**Fig. 9**

142          140

138          136 138          135

130

134

132

**Fig. 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20090039644 A1
- WO 03089250 A2
- EP 1251152 B1
- WO 2009033601 A1

**In der Beschreibung aufgeführte Nicht-Patentliteratur**

- **JIANPING GE.** Magnetically responsive colloidal photonic crystals. *Journal of Materials Chemistry,* vol. 18 (42